# EUROPÄISCHE PATENTSCHRIFT

(11) **EP 2 627 591 B1**
(45) Veröffentlichungstag und Bekanntmachung des Hinweises auf die Patenterteilung: **02.03.2016**
(21) Anmeldenummer: 11770095.5
(22) Anmeldetag: 13.10.2011
(51) Int. Cl.: B65D 88/00, B65D 88/12, B65D 88/54, B65D 88/58, B65D 90/00, B65D 90/18, B65D 88/14

(54) **CONTAINER FÜR DEN TRANSPORT EINES FAHRZEUGS**
CONTAINER FOR TRANSPORTING A VEHICLE
CONTENEUR POUR LE TRANSPORT D'UN VEHICULE

(30) Priorität: 15.10.2010 DE 102010042510
(43) Veröffentlichungstag der Anmeldung: 21.08.2013
(73) Patentinhaber: Deutsche Post AG, 53113 Bonn (DE)
(72) Erfinder: KOHLGRÜBER, Sven, 64546 Mörfelden-Waldorf (DE)
(74) Vertreter: Jostarndt, Hans-Dieter
(86) Internationale Anmeldenummer: PCT/EP2011/067851
(87) Internationale Veröffentlichungsnummer: WO 2012/049231

(56) Entgegenhaltungen:
- EP-A1- 1 707 505
- WO-A1-02/081339
- DE-A1- 3 432 409
- DE-A1-102008 052 238
- GB-A- 2 246 337
- JP-A- 11 147 591

## Beschreibung

Die Erfindung betrifft einen Container für den Transport eines Fahrzeugs, der im Wesentlichen quaderförmig mit einer ersten und einer zweiten Stirnseite, zwei Längsseiten, einer Unterseite und einer Oberseite aufgebaut ist.

Fahrzeuge, vor allem Kraftfahrzeuge, werden heute in breitem Umfang über teilweise große Strecken transportiert. Dabei müssen die Fahrzeuge gegen Beschädigungen geschützt werden. Dies trifft insbesondere dann zu, wenn die Fahrzeuge besonders wertvoll sind, also z.B. bei Rennfahrzeugen, Oldtimern, Prototypen, Ausstellungsfahrzeugen oder anderen seltenen Fahrzeugen. Darüber hinaus sollen vor allem Prototypen vor den Blicken Unbefugter geschützt werden. Daher werden solche Fahrzeuge vermehrt in Großraumtransportbehältnissen, sogenannten Containern, transportiert.

Container der eingangs genannten Art sind bekannt und z.B. in der ISO 668 genormt. Es handelt sich hierbei um sogenannte Seefrachtcontainer, die als 10 Fuß, 16 Fuß, 20 Fuß und 40 Fuß Container auch für den Transport von z.B. Kraftfahrzeugen geeignet sind und auch benutzt werden. Solche Container sind sehr robust gebaut, was sich allerdings in einem hohen Eigengewicht niederschlägt. Daher sind solche Container nicht für den Transport via Luftfracht geeignet. Die Bedeutung des Lufttransports von besonderen Fahrzeugen, wie oben beispielhaft aufgezählt, hat in letzter Zeit stark zugenommen. Soll ein Fahrzeug mittels eines Flugzeugs transportiert werden, muss es zunächst z.B. in einem Container der eingangs genannten Art zu einem Flughafen verbracht und dort in ein geeignetes Flugzeug umgeladen werden. Dazu muss das Fahrzeug aus dem Container ausgeladen und auf eine Flugzeugpalette verbracht werden. Dabei entsteht nicht nur ein zusätzlicher Verladeaufwand, sondern es besteht auch erneut die Gefahr einer Beschädigung. Bei Fahrzeugen, die vor den Blicken Unbefugter geschützt werden müssen, ist zusätzlicher Aufwand bei diesem Umladevorgang zu treiben. Ein weiterer Nachteil solcher eingangs genannter Container für den Transport von Kraftfahrzeugen besteht in der Tatsache, dass sie eine begrenzte Innenbreite aufweisen, die nur wenig größer als die Breite von vielen Fahrzeugen ist. Dadurch kann es leicht zu Beschädigungen an den Fahrzeugen beim Einfahren in den Container kommen. Ebenso können sehr leicht die Türen der Fahrzeuge beschädigt werden, da sie sich üblicherweise im Container wegen dessen begrenzter Innenbreite nicht vollständig öffnen lassen und beim Öffnen mit den Innenwänden der Container kollidieren. Darüber hinaus ist das Ein- und Ausstelgen for das Personal, das die Fahrzeuge verlädt, wegen der begrenzten Öffnungsmöglichkeit der Fahrzeugtüren unbequem. Die Fahrzeuge müssen in den Containern gegen Bewegung gesichert werden. Dies geschieht üblicherweise durch Sichern über die Fahrzeugräder. Dies ist wiederum durch die geringe Innenbreite der Container gerade bei der der Ladeöffnung abgewandten Seite eines in einem Container verladenen Fahrzeugs sehr schwierig.

EP0 319 974 A1 offenbart einen Mehrzweckcontainer, der für den Transport von Kraftfahrzeugen besonders geeignet ist. Dieser Container weist zusätzlich zu der üblichen Verladeöffnung in einer Stirnseite in seinen Seitenwänden verschließbare Öffnungen in Form von Türen auf. Wenn ein Fahrzeug so in den Container eingefahren wird, dass die Position der Fahrzeugtür mit der einer Seitentür des Containers fluchtet, kann die Fahrzeugtür bei geöffneter korrespondierender Containerseitentür bequem und vollständig geöffnet werden. Auch ist die Fixierung des in den Container eingefahrenen Fahrzeugs nun leicht möglich. Aus Stabilitätsgründen ist es aber nicht möglich, die Seftenwand des Containers über der gesamten Contalnerlänge so zu gestalten, dass sie geöffnet werden kann. Vielmehr müssen zwischen einzelnen Öffnungen Stützen fest in der Containerwand vorgesehen werden. Je nach zu verladendem Fahrzeug können die Fahrzeugtüren beim Öffnen mit diesen Stützen kollidieren. In jedem Fall ist im Minimalfall ein Rahmen an der stirnseitigen Verladeöffnung des Containers vorgesehen, so dass der Nachteil des Beschädigungsrisikos beim Einfahren In den Container nach wie vor gegeben ist. Darüber hinaus weist dieser Container den Nachteil auf, dass er wegen seines Gewichts und seiner Abmaße nicht für den Lufttransport geeignet ist.

Die europäische Patentanmeldung EP 1 707 505 A1 offenbart einen Container für den Transport eines Fahrzeugs, der Im Wesentlichen quaderförmig mit einer ersten und einer zweiten Stirnseite, zwei Längsseiten, einer Unterseite und einer Oberseite aufgebaut ist, wobei der Container eine erste Stirnseite, ein Bodenelement, das die Unterseite beinhaltet, und eine relativ zu dem Bodenelement bewegbare Haube, die mindestens die zweite Stirnseite, die zwei Längsseiten und die Oberseite beinhaltet, aufweist.

Das Volumen diese Container Ist fixiert und nicht veränderbar, Insbesondere nicht verlängerbar, um beispielsweise Fahrzeuge mit großen axialen Karosserieüberhängen transportieren zu können.

Die englische Patentanmeldung GB 2 246 337 A offenbart ein Erweiterungsmodul für einen Früchtcontainer. Standard-Frachtcontainer weisen an einer Stirnseite Flügeltüren auf, die jeweils an einer Aufhängung drehbar an jeweils einer Seitenwand des Containers angebracht sind. Die Patentanmeldung schlägt Erweiterungsmodule vor, die an diese Aufhängungen angebracht werden können. Dabei können in einer Ausführungsform zwei Erweiterungsmodule vorgesehen sein, die jeweils statt einer der Flügeltüren drehbar an jeweils einer Seitenwand des Containers angebracht werden und den Container analog der Türen verschließen können bzw. sich Öffnung des Containers zu jeweils einer Seite hin verschwenkbar sind. In einer anderen Ausführungsform wird vorgeschlagen, ein quaderförmiges Erweiterungsmodul, das an den Türaufhängungen das Containers befestigbar ist, vorzusehen. Die Originalflügeltüren können an dem Container verbleiben, indem sie beispielsweise in maximaler Öffnungsstellung fixiert werden. Das Erweiterungsmodul weist zur Öffnung selbst zwei Flügeltüren an einer Stirnseite auf. Dieser Container ist zwar verlängerbar, durch seine schwere Konstruktion, sowie seine Form nicht für den Lufttransport geeignet.

Aufgabe der Erfindung ist es daher, einen Container mit einer verlängerbaren Haube für den Transport von Fahrzeugen bereitzustellen, der für den Transport via Luftfracht, Seefracht und den Landtransport geeignet ist und das Beschädigungsrisiko für die transportierten Fahrzeuge gerade beim Be- und Entladen minimiert. Dabei sollte das Fahrzeug auch bei einem gemischten Land-, See- und / oder Lufttransport nicht aus dem Container ausgeladen werden müssen. Der Container sollte darüber hinaus die Möglichkeit aufweisen, ein in seinem Inneren transportiertes Fahrzeug vor den Blicken Unbefugter zu schützen.

Erfindungsgemäß wird die Aufgabe durch einen Container mit den Merkmalen des unabhängigen Anspruchs 1 gelöst. Vorteilhafte Ausführungsformen des Containers ergeben sich aus den Unteransprüchen 2 bis 14.

Ein Bestandteil der Erfindung ist es, einen Container bereitzustellen, der im Wesentlichen quaderförmig mit einer ersten und einer zweiten Stirnseite, zweite, Längsseiten, einer Unterseite und einer Oberseite aufgebaut ist, wobei der Container eine erste Stirnseite, ein Bodenelement, enthaltend die Unterseite, und eine Haube, enthaltend die zweite Stirnseite, die zwei Längsseiten und die Oberseite, aufweist. Vorzugsweise ist die Haube verschiebbar gegenüber dem Bodenelement angeordnet. Das Beladungspersonal kann die Haube in Richtung der, der Beladungsseite gegenüber liegenden Seite so verschieben, dass das Bodenelement zumindest zu einem großen Teil nicht mehr von der Haube bedeckt wird. Nun kann ein Fahrzeug auf das Bodenelement gefahren werden, ohne Gefahr zu laufen, ein Seitenteil des Containers zu berühren und dadurch das Fahrzeug zu beschädigen. Das Beladungspersonal kann eine Fahrzeugtür komplett öffner, um auszusteigen, ohne dass die Fahrzeugtür mit der Innenwand des Containers in Berührung kommt. Darüber hinaus können sogar alle Fahrzeugtüren gleichzeitig und sogar alle Hauben des Fahrzeugs, wie z.B. Motorhaube und Kofferraumhaube, geöffnet werden. Fahrzeuge können unabhängig von der Frage, ob es sich um Links- oder Rechtslenker handelt, gleichsinnig, also z.B. immer vorwärts, verladen werden. Zur Fixierung des Fahrzeugs auf dem Bodenelement steht dem Beladungspersonal ausreichend Platz zur Verfügung. Nachdem das Fahrzeug auf dem Bodenelement fixiert ist, kann die Haube wieder über das Bodenelement geschoben werden. Nach Schließen der ersten Stirnseite als Beladungsseite ist der Container geschlossen. Dieser Container kann nun gemeinsam mit dem Fahrzeug in ein Flugzeug, einen Lastkraftwagen, Bahnwagon oder Schiff, oder zum See- bzw. Landtransport auch in einen üblichen Seefrachtcontainer verbracht werden.

Erfindungsgemäß weist der Container an seiner zweiten Stirnseite ein Stützelement auf, so dass der Container bei Anheben an seiner ersten Stirnseite z.B. mit einem Flurförderfahrzeug, wie einem Gabelstapler, bewegt und z.B. in einen Seefrachtcontainer eingeschoben werden kann.

Der Container ist komplett verschließbar. An der ersten Stirnseite, der Beladungsseite, befindet sich eine Öffnung, die mit einem wieder verschließbaren Verschlusselement verschlossen werden kann. Dieses Verschlusselement kann aus einer Klappe oder aus einer Flügeltür mit einem oder mehreren Flügeln bestehen. Auch andere geeignete Verschlusselemente, wie z.B. Falttüren oder Rolltore, sind vorstellbar.

In einer weiteren vorteilhaften Ausführungsform besteht die erste Stirnseite als Beladungsseite aus einer Wand, die als Auffahrrampe ausgebildet ist. Diese Rampe weist ein erstes Ende, mit dem sie mit dem Bodenelement schwenkbar verbunden ist, und ein zweites, oberes Ende auf. Zum Beladen des Containers wird sie um die schwenkbare Verbindung mit dem Bodenelement nach außen geschwenkt, bis sie mit ihrem oberen Ende den Boden berührt. Ein Fahrzeug kann nun über diese Rampe in den Container verbracht werden. Nach der Beladung des Containers und der Fixierung des Fahrzeugs im Container, kann die Rampe in eine im Wesentlichen senkrechte Position gebracht werden, in dem sie um im Wesentlichen 90° um die schwenkbare Verbindung mit dem Bodenelement entgegen der ersten Schwenkbewegung geschwenkt wird, um die erste Stirnseite des Containers zu verschließen. Vorteilhafterweise kann die Rampe an den Seitenwänden des Containers und/oder der Oberseite und/oder dem Bodenelement fixiert werden. Die Rampe kann aus Gewichtsgründen aus einer Aluminiumlegierung bestehen. Selbstverständlich sind auch andere geeignete Materialien, wie z.B. Stahl, denkbar. Dabei kann die Rampe selbst das Verschlusselement bilden. Der Container kann aber auch so ausgestaltet werden, dass die Rampe in eine im Wesentlichen zum Bodenelement senkrechte Position geklappt und der Container von einem zusätzlichen Verschlusselement verschlossen werden kann.

Der Container kann in einer weiteren vorteilhaften Ausführungsform in der Dachkonstruktion Zusatzrampen aufnehmen, die es als Rampenverlängerung erlauben, Fahrzeuge mit besonders kleiner Bodenfreiheit zu verladen.

Die Wände und das Verschlusselement des Containers können isoliert sein, um beim Transport von besonders empfindlichen Fahrzeugen eventuelle Schwankungen des Innenklimas gegenüber einer nicht isolierten Variante zu verringern. Durch Schwankungen von Temperatur und Luftfeuchtigkeit kann es z.B. zu Kondenswasserbildung an dem transportierten Fahrzeug kommen, die unerwünscht ist bzw. bei bestimmten Fahrzeugen vermieden werden muss.

In einer bevorzugten Ausführungsform weist der Container im Innern eine Seilwinde auf, mit der Fahrzeuge auf das Bodenelement hinauf und/oder in den Container hineingezogen werden können, ohne dass das Fahrzeug mit eigener Motorkraft bewegt werden muss. Bevorzugt ist diese Seilwinde an dem Bodenelement befestigt. Wenn die Seilwinde manuell betrieben wird, ist der Container universell einsetzbar und beim Verladen mit Seilwinde nicht auf das Vorhandensein von Fremdenergie angewiesen.

In einer weiteren vorteilhaften Ausführungsform besteht der Container aus Profilen und Blechen aus einer Aluminiumlegierung. Dieses Material bietet den Vorteil, leicht und gleichzeitig stabil zu sein. Es sind aber auch andere leichte und stabile Materialien, wie Kunststoffmaterialien oder Verbundwerkstoffe, besonders für die Haube denkbar, wobei gerade das Bodenelement auch z.B. aus Stahl bestehen kann. Es hat sich als vorteilhaft erwiesen, das Bodenelement gegen Korrosion zu schützen. Dies kann neben der Auswahl von nichtrostenden Materialen auch durch alle geeigneten Behandlungen zum Korrosionsschutz, wie z.B. Lackieren oder Verzinken, geschehen.

Weitere Vorteile, Besonderheiten und zweckmäßige Ausgestaltungen der Erfindung ergeben sich aus den Unteransprüchen und der nachfolgenden Darstellung bevorzugter Ausführungsbeispiele anhand der Abbildung.

Von den Abbildungen zeigen
- Fig. 1: den Container mit geraden Wänden, geschlossener Haube und einer Flügeltür als Verschlusselement in perspektivischer Darstellung
- Fig. 2: den Container mit abgewinkelten Wänden, geschlossener Haube und einer Klappe als Verschlusselement in perspektivischer Darstellung
- Fig. 3: den Container mit abgewinkelten Wänden, geöffneter und teilweise zurückgeschobener Haube in perspektivischer Darstellung
- Fig. 4: den erfindugsgemäßen Container mit abgewinkelten und verlängerten Wänden, geschlossener Haube und einer Klappe als Verschlusselement in perspektivischer Darstellung
- Fig. 5: den Container mit abgewinkelten Wänden, geschlossener Haube und einer Flügeltür als Verschlusselement in perspektivischer Darstellung
- Fig. 6: die Sicht auf die zweite Stirnseite des Containers mit geraden Wänden
- Fig. 7: die Einzelheit X aus Fig. 6 in vergrößerter Darstellung
- Fig. 8: den Schnitt A-A aus Fig. 2
- Fig. 9: die Einzelheit L aus Fig. 1 in vergrößerter Darstellung
- Fig. 10: die Einzelheit I aus Fig. 1 in vergrößerter Darstellung

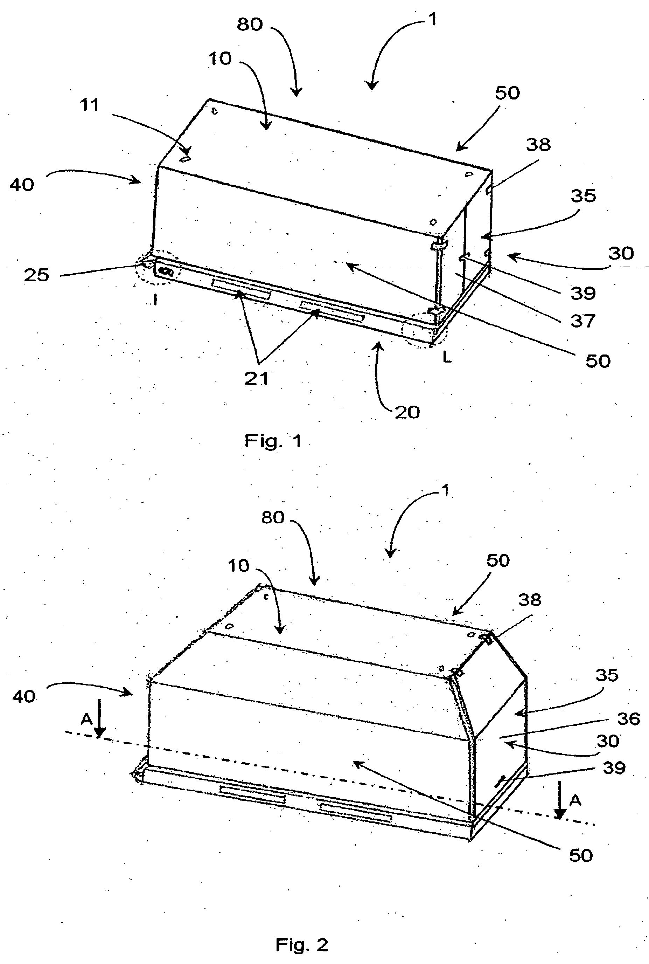

In Fig. 1 ist der Container (1) in einer perspektivischen Darstellung mit geschlossener Haube (80) abgebildet. Zu erkennen ist die geschossene Oberseite (10) des Containers. Die Oberseite kann mit einem Blech oder einer Platte aus einem leichten Material, wie z.B. einer Aluminiumlegierung oder Kunststoff, beplankt sein. Eine Beplankung der Oberseite weist den Vorteil auf, dass ein sich in dem Container (1) befindliches Fahrzeug optimal gegen Beschädigungen durch von oben einwirkende Fremdkörper wie z.B. Hagel oder herab fallende Gegenstände, geschützt ist. In einer weiteren Ausführungsform ist die Oberseite (10) mit einer Plane, die zwischen einem Rahmen befestigt ist, verschlossen. Eine weitere Ausführungsform sieht eine zwischen dem Rahmen offene Oberseite (10) vor. Vier Ösen (15) sind an der Oberseite (10) angebracht. An diesen Ösen kann ein Hebezeug für einen Gabelstapler oder einen Kran befestigt werden, über das der Container (1) angehoben werden kann. An der Unterseite (20) sind an der zweiten Stirnseite (40) des Containers (1) Rollen (25) angebracht, auf denen der Container (1) gerollt werden kann, wenn er an der ersten Stirnseite (30) angehoben wird. Weiterhin sind zwei Einfahrschuhe (21) an einer Längsseite (50) des Containers (1) zu erkennen.-Diese Einfahrschuhe befinden sich in dem Bodenelement (5) des Containers (1). Hier können die Zinken eines Gabelstaplers einfahren und den Container anheben. Die erste Stirnseite (30), durch die der Container (1) beladen werden kann, weist eine wieder verschließbare Öffnung (35) auf, die mit einer Flügeltür (37) verschlossen ist. Die Flügel dieser Flügeltür (37) sind mit Scharnieren (38) an den Längsseiten (50) des Containers (1) angeschlagen. Die Tür (37) weist ein Schloss (39) auf, mit dem die Tür fest verschlossen werden kann und das als Zollverschluss ausgeführt sein kann.

In Fig. 2 ist eine zweite Ausführungsform des Containers (1) in einer perspektivischen Darstellung mit geschlossener Haube (80) abgebildet. Bei dieser Ausführungsform sind die Wände der Stirnseiten (30, 40) und der Längsseiten (50) im oberen Bereich zur Containermitte hin abgeschrägt. Fahrzeuge weisen üblicherweise eine im oberen Bereich schmalere Kontur als im unteren Bereich auf, so dass trotz dieser abgeschrägten Wände die meisten Fahrzeugmodelle in dem Container (1) transportiert werden können. Die Abschrägung der Containerwände im oberen Bereich hat den Vorteil, dass sich der Container der Kontur der Frachträume von Flugzeugen angleicht, wodurch mehr Container (1) in einem Flugzeug transportiert werden können. Die erste Stirnseite (30), durch die der Container (1) beladen werden kann, weist eine wieder verschließbare Öffnung (35) auf, die mit einer Klappe (36) verschlossen ist. Die Klappe (36) ist über Scharniere (38) an der Oberseite (10) der Haube (80) angeschlagen. Die Form des Verschlusses (36, 37) der wieder verschließbaren Öffnung (35) des Containers (1) ist dabei unabhängig von der Kontur der Containerwände, so dass entsprechende Ausführungsformen beliebig miteinander kombiniert werden können. Die Klappe weist weiterhin ein Schloss (39) auf, mit dem sie fest verschlossen werden kann. Dieses Schloss kann als Zollverschluss ausgeführt sein.

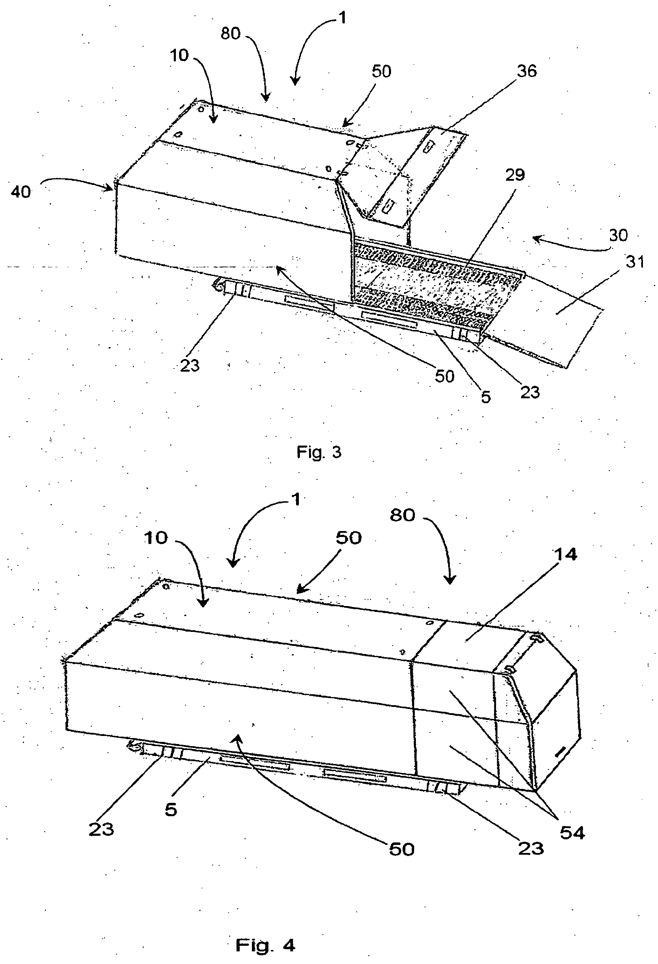

Fig. 3 zeigt den Container (1) mit geöffneter Haube (80) in perspektivischer Darstellung. Das Bodenelement (5) des Containers (1) weist eine Auffahreinrichtung (29) aus einem gelochten Blech auf. Form und Abstand der Löcher sind dabei so gewählt, dass leicht entsprechende Fixiereinrichtungen daran befestigt werden können. An der ersten Stirnseite (30) ist eine Rampe (31) am Bodenelement (5) schwenkbar angebracht. Die Rampe (31) ist in Figur 2 auf den Boden vor dem Container (1) ausgeklappt, so dass ein Fahrzeug auf die Auffahreinrichtung (29) des Bodenelements (5) auffahren kann. Das Bedienpersonal kann die Fahrzeugtüren weit öffnen, um bequem und ohne die Fahrzeugtüren zu beschädigen aus- und einsteigen zu können. Das Bodenelement (5) weist an seinen Längsseiten Ziehösen (23) auf, mit denen der Container (1) in dem jeweiligen Transportmittel, wie Flugzeug, Schiff, Seecontainer oder Lastkraftwagen, fest gezurrt werden kann.

Fig.4 zeigt den erfindungsgemäßen Container mit verlängerter Haube (80) in geschlossener Stellung und in perspektivischer Darstellung. Zur Haubenverlängerung sind die Längsseiten (50) und die Oberseite (10) jeweils zweigeteilt ausgeführt. Die Teile können getrennt werden, um Zwischenstücke (14, 54) einzusetzen. Die Haube (80) kann so bei gleich bleibendem Bodenelement (5) verlängert werden, um z.B. Fahrzeuge mit großen axialen Karosserieüberhängen transportieren zu können. Um solche Fahrzeuge ohne Gefahr des Aufsetzens mit einem Karosserieüberhang verladen zu können, kann die Rampe (31) mit geeigneten Zusatzelementen verlängert werden. In einer vorteilhaften Ausführungsform können diese Zusatzelemente für den Transport im Dach der Haube (80) verstaut werden (nicht gezeigt). Auch wenn Fahrzeuge mit sehr geringer Bodenfreiheit verladen werden sollen, ist die Benutzung solcher Zusatzrampen, die länger als die am Bodenelement (5) befestigte Rampe (31) ausgeführt sind, von Vorteil.

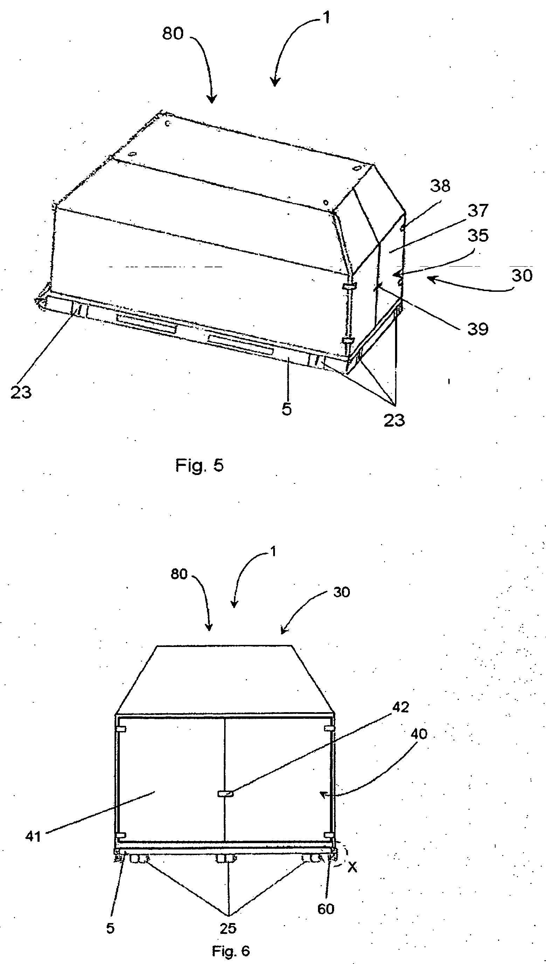

In Fig. 5 ist der Container (1) in einer perspektivischen Darstellung mit geschossener Haube (80) abgebildet. Die erste Stirnseite (30), durch die der Container (1) beladen werden kann und die die wieder verschließbare Öffnung (35) aufweist, ist bei der in Fig. 5 gezeigten Ausführungsform mit einer zweiflügeligen Tür (37) verschlossen. Die Türflügel sind über Scharniere (38) an den Längsseiten (50) des Containers (1) angeschlagen. Die Tür (37) weist weiterhin ebenfalls ein Schloss (39) auf, mit dem sie fest verschlossen werden kann. Dieses Schloss kann als Zollverschluss ausgeführt sein.

Die in Fig. 5 gezeigte Ausführungsform des Containers (1) weist ein Bodenelement (5) auf, bei dem Ziehösen (23) zusätzlich zu den Längsseiten (50) auch an den Stirnseiten (30, 40) vorgesehen sind. Dabei ist die Anordnung der Ziehösen (23) unabhängig von der Ausführungsform des Containers (1) mit Klappe (36) oder Flügeltür (37). Die Flügeltür (37) kann darüber hinaus auch einflügelig ausgeführt sein. Auch ist der Verschluss der wieder verschließbaren Öffnung (35) des Containers (1) mit anderen geeigneten Verschlusselementen, wie z.B. einer Falttür oder einem Rolltor, denkbar.

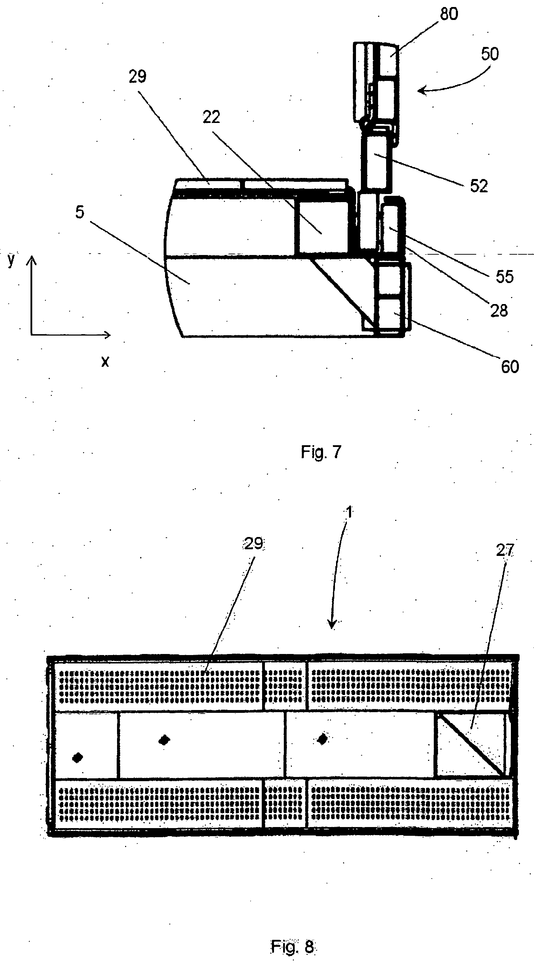

Fig. 6 stellt die Sicht auf die zweite Stirnseite (40) des Containers (1) dar. Der Container (1) kann auf drei doppelten Rollen (25), die an der zweiten Stirnseite (40) an dem Bodenelement (5) befestigt sind, bewegt werden, wenn er an der ersten Stirnseite (30) angehoben wird. Die Haube (80) kann auf Führungsrollen (55) (Fig. 7) und Stützrollen (60) gegenüber dem Bodenelement (5) bewegt werden. Der Container (1) kann auch an der zweiten Stirnseite (40) eine zusätzliche Zugangsmöglichkeit (41), die durch ein geeignetes Verschlusselement, wie z.B. eine Tür oder eine Klappe verschlossen werden kann, aufweisen: Dadurch kann der Zugang zu der in Richtung dieser zweiten Stirnseite (40) hinweisenden Front oder zu dem Heck eines verladennen Fahrzeugs erleichtert werden. Auch diese zusätzliche Zugangsmöglichkeit (41) kann ein Schloss (42) aufweisen, so dass der Container auch im Fall der zusätzlichen Zugangsmöglichkeit (41) fest verschließbar ausgeführt sein kann.

Fig. 7 ist die Einzelheit X aus Fig. 6. An einem Rahmen (22) des Bodenelements (5) befindet sich in Längsrichtung ein Profil (28), in dem eine am Seitenteil (50) befestigte Führungsrolle (55) laufen kann. Dieses Profil (28) ist dabei so geformt, das die Führungsrolle (55) eine Aufstandsfläche in negativer y-Richtung vorfindet, seitlich in x- und nach oben hin in y-Richtung geführt ist. Die Führungsrolle ist mit der Haube (80) über einen Rahmen (52) der Längsseiten (50) verbunden. Weiterhin stützt sich die Haube (80) auf einer Stützrolle (60) gegenüber dem Boden ab.

Fig. 8 ist der Schnitt A-A aus Fig. 2 durch den Container (1). Die Unterseite (20) des Containers (1) ist zur Innenseite des Containers (1) hin mit Auffahreinrichtungen (29) ausgestattet. Diese Auffahreinrichtungen(29) bestehen aus Lochblechen, auf denen Fixiereinrichtungen für das Fahrzeug leicht befestigt werden können. Zwischen den Auffahreinrichtungen (29) weist die Unterseite (20) eine Wanne (27) auf, in der z.B. Fixiereinrichtungen für Fahrzeuge bei Nichtgebrauch transportiert werden können.. Diese Wanne (27) kann mit einem Verschlusselement abgeschlossen werden (nicht gezeigt). Die Unterseite (20) kann zwischen den Auffahreinrichtungen offen sein. Es ist aber auch möglich, die Unterseite zusätzlich zu den Auffahreinrichtungen oder nur zwischen den Auffahreinrichtungen zu beplanken oder anders, z.B. mit einer Plane, zu verschießen.

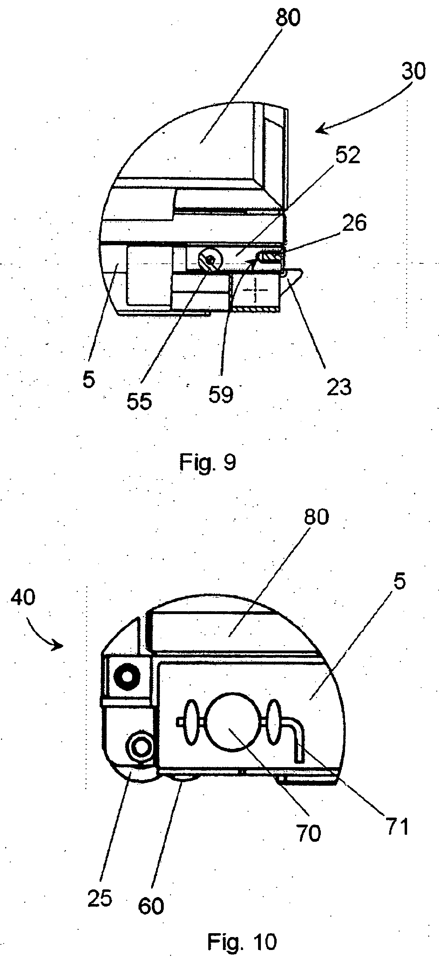

Fig. 9 ist die Einzelheit L aus Fig. 1. In dem Rahmen (52) der Längsseite befindet sich eine Aussparung (59), die einen Zapfen (26), der sich an dem Bodenelement (5) des Containers (1) befindet, aufnimmt, wenn die Haube (80) geschlossen ist, und die Haube (80) im geschlossenen Zustand gegen Abheben sichert. Auch an den Stirnseiten (30, 40) befinden sich Ziehösen (23) zum Befestigen des Containers (1) in einem Transportmittel wie einem Flugzeug, einem Schiff, einem Seecontainer oder einem Lastkraftwagen.

Fig. 10 ist die Einzelheit I aus Fig. 1. Die Haube (80) wird im geschlossenen Zustand über einen Sicherungsbolzen (70) gegenüber dem Bodenelement (5) arretiert. Der Sicherungsbolzen (70) ist über einen Riegel (71) gegen unbeabsichtigtes Lösen gesichert.

### Bezugszeichenliste:

- 1: Container
- 5: Bodenelement
- 10: Oberseite
- 11: Kranösen
- 13: Beplankung
- 14: Zwischenstück
- 20: Unterseite
- 21: Einfährschüh
- 22: Rahmen
- 23: Ziehöse
- 25: Rolle
- 26: Zapfen
- 27: Wanne
- 28: Profil
- 29: Auffahreinrichtung
- 30: erste Stirnseite
- 31: Rampe
- 35: wiederverschließbare Öffnung
- 36: Klappe
- 37: Flügeltür
- 38: Scharnier
- 39: Schloss
- 40: zweite Stirnseite
- 41: zusätzliche Zugangsmöglichkeit
- 42: Schloss
- 50: Längsseite
- 52: Rahmen
- 54: Zwischenstück
- 55: Führungsrolle
- 59: Aussparung
- 60: Stützrolle
- 70: Sicherungsbolzen
- 71: Riegel
- 80: Haube

## Patentansprüche

1. Container (1) für den Transport eines Fahrzeugs, der im Wesentlichen quaderförmig mit einer ersten (30) und einer zweiten (40) Stirnseite, zwei Längsseiten (50), einer Unterseite (20)und einer Oberseite (10) aufgebaut ist, wobei der Container (1) eine erste Stirnseite (30), ein Bodenelement (5), das die Unterseite (20) beinhaltet, und eine relativ zu dem Bodenelement bewegbare Haube (80), die mindestens die zweite Stirnseite (40), die zwei Längsseiten (50) und die Oberseite (10) beinhaltet, aufweist, wobei sich an der ersten Stirnseite (30) des Containers (1) eine mit einem Verschlusselement (31, 36, 37) wieder verschließbare Öffnung (35) befindet, wobei das Bodenelement (5) an der zweiten Stirnseite (40) ein Stützelement (25) aufweist, auf dem der Container (1) bewegt werden kann, wenn er an der ersten Stirnseite (30) angehoben wird,
**dadurch gekennzeichnet, dass**
sich Zwischenelemente (14, 54) für die Oberseite (10) und die Längsseiten (50) zwischen die Oberseite (10) und die Längsseiten (50) einhängen lassen, so dass die Haube (80) in Längsrichtung verlängerbar ist, wobei die Längsseiten (50) und die Oberseite (10) jeweils zweigeteilt ausgeführt sind, so dass die Teile getrennt werden können, um die Zwischenelemente (14, 54) einzusetzen.

2. Container (1) nach Anspruch 1,
**dadurch gekennzeichnet, dass**
die Haube (80) an der zweiten (40), der ersten Stirnseite (30) abgewandten Stirnseite, Stützrollen (60) aufweist, die bis zur Unterkante der Unterseite (20) des Containers (1) reichen, und auf beiden Längsseiten (50) Führungsrollen (55) aufweist, die auf dem Bodenelement (5) des Containers (1) abrollen können, so dass die Haube auf diesen Stützrollen (60) und Führungsrollen (55) gegenüber dem Bodenelement (5) verschoben werden kann.

3. Container (1) nach Anspruch 1 oder 2,
**dadurch gekennzeichnet, dass**
die Haube (80) mit dem Bodenelement (5) über ein Verriegelungselement (70) so verriegelt ist, dass sie nicht von dem Bodenelement (5) abgehoben werden kann.

4. Container (1) nach einem der vorhergehenden Ansprüche,
**dadurch gekennzeichnet, dass**
die Haube (80) im geschlossenen Zustand mittels eines in eine Aussparung (29) hineinragenden Zapfens (26) gegenüber dem Bodenelement (5) arretiert werden kann.

5. Container (1) nach einem der vorhergehenden Ansprüche,
**dadurch gekennzeichnet, dass**
sich an der erste Stirnseite (30) eine mit dem Bodenelement (5) des Containers (1) derart schwenkbar verbundene Rampe (31) befindet, die einerseits so in den Container (1) eingeschwenkt werden kann, dass sie im Wesentlichen senkrecht zur Unterseite (20) arretiert werden kann, und andererseits so nach außen geschwenkt werden kann, dass sie als Auffahrrampe (31) für das Bodenelement (5) dienen kann.

6. Container (1) nach einem der vorherigen Ansprüche,
**dadurch gekennzeichnet, dass**
die wieder verschließbare Öffnung (35) mit einer nach oben aufschwenkbaren Klappe (36) als Verschlusselement verschlossen werden kann.

7. Container (1) nach einem der vorherigen Ansprüche,
**dadurch gekennzeichnet, dass**
die wieder verschließbare Öffnung (35) mit einer Flügeltür (37) als Verschlusselement verschlossen werden kann.

8. Container (1) nach Anspruch5,
**dadurch gekennzeichnet, dass**
die wieder verschließbare Öffnung (35) mit der Rampe (31) als Verschlusselement verschlossen werden kann.

9. Container (1) nach einem oder mehreren der der vorherigen Ansprüche,
**dadurch gekennzeichnet, dass** an dem Verschlusselement (31, 36, 37) der wieder verschließbaren Öffnung (35) Zollverschlussmöglichkeiten vorgesehen sind.

10. Container (1) nach einem der vorhergehenden Ansprüche,
**dadurch gekennzeichnet, dass**
das Bodenelement (5) eine zum Auffahren mit einem Fahrzeug geeignete gelochte Auffahreinrichtung (29) aufweist, so dass ein Fahrzeug an der Auffahreinrichtung (29) arretiert werden kann.

11. Container (1) nach einem der vorherigen Ansprüche,
**dadurch gekennzeichnet, dass**
das das Stützelement (25) um sich selbst drehbar ausgeführt ist.

12. Container (1) nach einem der vorhergehenden Ansprüche,
**dadurch gekennzeichnet, dass**
das Bodenelement (5) an einer Längsseite einen Einfahrschuh (21) für ein Lastaufnahmeelement eines Flurförderfahrzeugs aufweist.

13. Container (1) nach einem der vorhergehenden Ansprüche,
**dadurch gekennzeichnet, dass**
auf der Oberseite (10) des Containers (1) Kranösen (11) angeordnet sind, an denen der Container (1) angehoben werden kann.

14. Container (1) nach einem der vorhergehenden Ansprüche,
**dadurch gekennzeichnet, dass**
der Container (1) Elemente aus einer Aluminiumlegierung enthält.

## Claims

1. A container (1) for transporting a vehicle, said container being essentially cuboidal and having a first end face (30) and a second end face (40), two lengthwise sides (50), a bottom (20) and a top (10), whereby the container (1) has a first end face (30), a floor element (5) that makes up the bottom (20), and a superstructure (80) that is movable relative to the floor element and that comprises the second end face (40), the two lengthwise sides (50), and the top (10), whereby, on the first end face (30) of the container (1), there is a reclosable opening (35) that can be closed with a closure element (31, 36, 37), whereby, on the second end face (40), the floor element (5) has a support element (25) on which the container (1) can be moved once it has been lifted at the first end face (30),
**characterized in that**
intermediate elements (14, 54) for the top (10) and for the lengthwise sides (50) can be inserted between the top (10) and the lengthwise sides (50), so that the superstructure (80) can be extended in the lengthwise direction, whereby the lengthwise sides (50) and the top (10) are each configured in two parts so that the parts can be separated in order to insert intermediate elements (14, 54).

2. The container (1) according to claim 1,
**characterized in that,**
at the second end face (40), namely, the end face that faces away from the first end face (30), the superstructure (80) has support rollers (60) that extend to the lower edge of the bottom (20) of the container (1) and, on both lengthwise sides (50), it has guide rollers (55) that can roll on the floor element (5) of the container (1), so that the superstructure can be moved relative to the floor element (5) on these support rollers (60) and guide rollers (55).

3. The container (1) according to claim 1 or 2,
**characterized in that**
the superstructure (80) is latched onto the floor element (5) by means of a latching element (70) in such a way that it cannot be lifted off the floor element (5).

4. The container (1) according to one of the preceding claims,
**characterized in that,**
when the superstructure (80) is in the closed state, it can be locked in place relative to the floor element (5) by means of a pin (26) that extends into a recess (29).

5. The container (1) according to one of the preceding claims,
**characterized in that,**
at the first end face (30), there is a ramp (31) that is pivotably connected to the floor element (5) of the container (1) and, on the one hand, this ramp (31) can be pivoted into the container (1) in such a way that it can be locked in place essentially vertical to the bottom (20) and, on the other hand, it can be pivoted outwards in such a way that it can serve as a drive-on ramp (31) for the floor element (5).

6. The container (1) according to one of the preceding claims,
**characterized in that**
the reclosable opening (35) can be closed with a hatch (36) that can swing upwards and that serves as the closure element.

7. The container (1) according to one of the preceding claims,
**characterized in that**
the reclosable opening (35) can be closed with a leaf door (37) that serves as the closure element.

8. The container (1) according to claim 5,
**characterized in that**
the reclosable opening (35) can be closed with the ramp (31) that serves as the closure element.

9. The container (1) according to one or more of the preceding claims,
**characterized in that**
security seals for customs purposes are provided on the closure element (31, 36, 37) of the reclosable opening (35).

10. The container (1) according to one of the preceding claims,
**characterized in that**
the floor element (5) has a suitable perforated drive-on means (29) on which a vehicle can be driven, so that a vehicle can be locked onto the drive-on means (29).

11. The container (1) according to one of the preceding claims,
**characterized in that**
the support element (25) is configured so as to rotate around itself.

12. The container (1) according to one of the preceding claims,
**characterized in that,**
on one lengthwise side, the floor element (5) has a fork entry (21) for the load pick-up element of an industrial floor truck.

13. The container (1) according to one of the preceding claims,
**characterized in that,**
on the top (10) of the container (1), there are crane lugs (11) by means of which the container (1) can be lifted.

14. The container (1) according to one of the preceding claims,
**characterized in that,**
the container (1) has elements made of an aluminum alloy.

## Revendications

1. Conteneur (1) pour le transport d'un véhicule, construit de manière sensiblement parallélépipédique et comportant une première face frontale (30) et une deuxième face frontale (40), deux côtés longs (50), une face inférieure (20) et une face supérieure (10), le conteneur (1) comportant une première face frontale (30), un élément de fond (5) qui comporte la face inférieure (20), et un capot (80) mobile relativement à l'élément de fond et comportant au moins la deuxième face frontale (40), les deux côtés longs (50) et la face supérieure (10), sur la première face frontale (30) du conteneur (1) se trouvant une ouverture (35) qui peut être refermée au moyen d'un élément de fermeture (31, 36, 37), l'élément de fond (5) comportant, au niveau de la deuxième face frontale (40), un élément d'appui (25) sur lequel le conteneur (1) peut être déplacé lorsqu'il est soulevé au niveau de la première face frontale (30), **caractérisé en ce que** des éléments intermédiaires (14, 54) pour la face supérieure (10) et les côtés longs (50) peuvent être accrochés entre la face supérieure (10) et les côtés longs (50), de sorte que le capot (80) peut être prolongé dans le sens longitudinal, les côtés longs (50) et la face supérieure (10) étant réalisés respectivement en deux parties, de sorte que les parties peuvent être séparées pour mettre en place les éléments intermédiaires (14, 54).

2. Conteneur (1) selon la revendication 1, **caractérisé en ce que** le capot (80) comporte, au niveau de la deuxième face frontale (40) opposée à la première face frontale (30), des galets d'appui (60) qui vont jusqu'au bord inférieur de la face inférieure (20) du conteneur (1) et, sur les deux côtés longs (50), des galets de guidage (55) qui peuvent rouler sur l'élément de fond (5) du conteneur (1) de manière à ce que le capot puisse être déplacé sur ces roulettes d'appui (60) et roulettes de guidage (55) par rapport à l'élément de fond (5).

3. Conteneur (1) selon la revendication 1 ou 2, **caractérisé en ce que** le capot (80) peut être verrouillé à l'élément de fond (5) par l'intermédiaire d'un élément de verrouillage (70) de manière à ne pas pouvoir être soulevé de l'élément de fond (5).

4. Conteneur (1) selon l'une des revendications précédentes, **caractérisé en ce que** le capot (80) peut, à l'état fermé, être bloqué par rapport à l'élément de fond (5) au moyen d'un axe (26) faisant saillie dans un évidement (29).

5. Conteneur (1) selon l'une des revendications précédentes, **caractérisé en ce que** se trouve, sur la première face frontale (30), une rampe (31) reliée de manière pivotante à l'élément de fond (5) du conteneur (1) de telle sorte qu'elle peut, d'une part, pivoter pour entrer dans le conteneur (1) de manière à pouvoir être bloquée de manière sensiblement verticale par rapport à la face inférieure (20) et, d'autre part, pivoter vers l'extérieur de manière à pouvoir servir de rampe d'accès (31) pour l'élément de fond (5).

6. Conteneur (1) selon l'une des revendications précédentes, **caractérisé en ce que** l'ouverture refermable (35) peut être fermée au moyen d'un volet (36) pouvant pivoter vers le haut en tant qu'élément de fermeture.

7. Conteneur (1) selon l'une des revendications précédentes, **caractérisé en ce que** l'ouverture refermable (35) peut être fermée au moyen d'une porte battante (37) en tant qu'élément de fermeture.

8. Conteneur (1) selon la revendication 5, **caractérisé en ce que** l'ouverture refermable (35) peut être fermée au moyen de la rampe (31) en tant qu'élément de fermeture.

9. Conteneur (1) selon l'une des revendications précédentes, **caractérisé en ce que** sont prévues des possibilités de scellement douanier sur l'élément de fermeture (31, 36, 37) de l'ouverture refermable (35).

10. Conteneur (1) selon l'une des revendications précédentes, **caractérisé en ce que** l'élément de fond (5) comporte un dispositif d'accès (29) perforé convenant pour l'accès avec un véhicule, de sorte qu'un véhicule peut être immobilisé sur le dispositif d'accès (29).

11. Conteneur (1) selon l'une des revendications précédentes, **caractérisé en ce que** l'élément d'appui (25) est réalisé de manière à pouvoir tourner sur lui-même.

12. Conteneur (1) selon l'une des revendications précédentes, **caractérisé en ce que** l'élément de fond (5) comporte, sur un côté long, un sabot d'entrée (21) pour un élément de réception de charge d'un véhicule de manutention.

13. Conteneur (1) selon l'une des revendications précédentes, **caractérisé en ce que** sont agencées, sur la face supérieure (10) du conteneur (1), des anneaux de levage (11) au niveau desquels le conteneur (1) peut être soulevé.

14. Conteneur (1) selon l'une des revendications précédentes, **caractérisé en ce que** le conteneur (1) comporte des éléments constitués d'un alliage d'aluminium.
